(19) Europäisches Patentamt / European Patent Office / Office européen des brevets

(11) **EP 4 579 989 A1**

(12) **EUROPEAN PATENT APPLICATION**
published in accordance with Art. 153(4) EPC

(43) Date of publication:
02.07.2025 Bulletin 2025/27

(21) Application number: 23941843.7

(22) Date of filing: 15.11.2023

(51) International Patent Classification (IPC):
*H02J 7/00* (2006.01)

(52) Cooperative Patent Classification (CPC):
H02J 3/32; H02J 7/00; H02J 15/00; Y02E 60/10

(86) International application number:
PCT/CN2023/131879

(87) International publication number:
WO 2025/091572 (08.05.2025 Gazette 2025/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.11.2023 CN 202311444824

(71) Applicant: Pylon Technologies Co., Ltd.
Shanghai 201203 (CN)

(72) Inventors:
• ZENG, Fanwei
  Shanghai 201203 (CN)
• CHEN, Yongji
  Shanghai 201203 (CN)
• MOU, Jian
  Shanghai 201203 (CN)
• CAI, Xuefeng
  Shanghai 201203 (CN)

(74) Representative: Bryn Aarflot AS
Patent
Stortingsgata 8
0161 Oslo (NO)

(54) **CURRENT DISTRIBUTION METHOD AND ANALOG CIRCUIT**

(57) The present disclosure provides a current distribution method and an analog circuit. The method includes: determining, according to a total quantity of battery clusters of a plurality of battery clusters connected in parallel in a battery energy storage system, a distribution proportion constraint interval set for each battery cluster; determining, according to a battery-cluster parameter, a current distribution target proportion set for each battery cluster, where the current distribution target proportion is within the distribution proportion constraint interval, and the battery-cluster parameter includes at least one of the following: a present remaining capacity of the battery cluster, a capacity set critical value and the distribution proportion constraint interval; and distributing current to various battery clusters according to the current distribution target proportion. The present disclosure can ensure battery clusters with different capacities to quickly reach balance during operation, thus achieving an effect of improving stability and reliability of the battery energy storage system.

FIG. 1

# Description

## CROSS-REFERENCE TO RELATED APPLICATIONS

The present disclosure claims the priority to the Chinese patent application with the filing No. 202311444824.3 filed with the China National Intellectual Property Administration on November 1, 2023 and entitled "CURRENT DISTRIBUTION METHOD AND ANALOG CIRCUIT", the contents of which are incorporated herein by reference in entirety.

## TECHNICAL FIELD

The present disclosure relates to the field of circuit technologies, and specifically to a current distribution method and an analog circuit.

## BACKGROUND ART

A battery energy storage system is composed of a plurality of battery clusters connected in parallel. In a process of overcharging or overdischarging the battery clusters, irreversible capacity attenuation will be generated, and overcharge will also bring about potential safety hazards of combustion and even explosion. In order to avoid overcharge or overdischarge of the battery clusters, a direct-current converter (DC/DC) in the battery energy storage system is usually used to realize precise control over charging and discharging currents of the battery clusters.

However, in a present current control algorithm, current distribution proportions set for various battery clusters are calculated by only considering different states of charge or only considering different battery capacities, so that the battery energy storage system is difficult to quickly reach a balance state in charging and discharging processes. Moreover, in a case where initial states of charge are excessively different, in order to enable states of charge of various battery clusters to reach consistency, significantly different current distribution proportions may be obtained through the present current control algorithm, and when the current distribution proportions are significantly different, oscillation outside the battery energy storage system tends to cause the battery energy storage system to be overloaded.

## SUMMARY

In view of this, the present disclosure aims at providing a current distribution method and an analog circuit, which can ensure battery clusters with different capacities to quickly reach balance during operation, thus achieving an effect of improving stability and reliability of a battery energy storage system.

In the first aspect, embodiments of the present disclosure provide a current distribution method, where the method includes:

determining, according to a total quantity of battery clusters of a plurality of battery clusters connected in parallel in a battery energy storage system, a distribution proportion constraint interval set for each battery cluster;

determining, according to a battery-cluster parameter, a current distribution target proportion set for each battery cluster, where the current distribution target proportion is within the distribution proportion constraint interval, and the battery-cluster parameter includes at least one of the following: a present remaining capacity of battery cluster, a capacity set critical value and the distribution proportion constraint interval; and

distributing current to various battery clusters according to the current distribution target proportion.

In an optional embodiment of the present disclosure, the determining, according to a total quantity of battery clusters of a plurality of battery clusters connected in parallel in a battery energy storage system, a distribution proportion constraint interval set for each battery cluster includes:

determining, where a system parameter of the battery energy storage system does not meet a current equipartition condition, according to the total quantity of battery clusters of the plurality of battery clusters connected in parallel in the battery energy storage system, the distribution proportion constraint interval set for each battery cluster.

In an optional embodiment of the present disclosure, the method further includes:

determining, where the system parameter of the battery energy storage system meets the current equipartition condition, according to the total quantity of battery clusters, a current equipartition proportion set for each battery cluster; and

distributing current to various battery clusters according to the current equipartition proportion.

In an optional embodiment of the present disclosure, the current equipartition condition includes one of the following: the battery energy storage system is in a standing operating condition, a direct-current converter in the battery energy storage system is in a fault state, a minimum state of charge of the battery energy storage system in discharging is not greater than a first preset proportion, and a maximum state of charge of the battery energy storage system in charging is not less than a second preset proportion, where the first preset proportion is less than the second preset proportion, and a difference between the states of charge is less than a preset difference threshold, where the difference between the states of charge represents a difference between a maximum state of charge and a minimum state of charge of all battery clusters currently having been connected to a direct-current bus.

In an optional embodiment of the present disclosure, the determining, according to a total quantity of battery clusters of a plurality of battery clusters connected in parallel in a battery energy storage system, a distribution proportion constraint interval set for each battery cluster includes:

acquiring the total quantity of battery clusters of the plurality of battery clusters connected in parallel in the battery energy storage system and an overload constraint proportion of the battery energy storage system, where the overload constraint proportion characterizes a preset proportion by which a current of the battery clusters exceeds a rated current range during charging or discharging; and
determining, according to the overload constraint proportion, a distribution proportion constraint upper limit and a distribution proportion constraint lower limit of the battery energy storage system, so as to determine the distribution proportion constraint interval set for each battery cluster.

In an optional embodiment of the present disclosure, the determining, according to the overload constraint proportion, a distribution proportion constraint upper limit and a distribution proportion constraint lower limit of the battery energy storage system includes:

determining, according to the overload constraint proportion, a distribution proportion constraint upper limit total value and a distribution proportion constraint lower limit total value of the battery energy storage system; and
determining, using ratios of the distribution proportion constraint upper limit total value and the distribution proportion constraint lower limit total value to the total quantity of battery clusters, the distribution proportion constraint upper limit and the distribution proportion constraint lower limit set for each battery cluster.

In an optional embodiment of the present disclosure, the battery-cluster parameter includes the present remaining capacity of the battery cluster and the capacity set critical value, where the capacity set critical value characterizes that various battery clusters in the battery energy storage system are converged to a consistent state of charge most quickly; and
the determining, according to a battery-cluster parameter, a current distribution target proportion set for each battery cluster includes:

determining, according to present remaining capacities of various battery clusters and the capacity set critical value, a first to-be-adjusted current distribution proportion set for each battery cluster; and
determining, according to whether the first to-be-adjusted current distribution proportion is within the distribution proportion constraint interval, the current distribution target proportion.

In an optional embodiment of the present disclosure, the determining, according to whether the first to-be-adjusted current distribution proportion is within the distribution proportion constraint interval, the current distribution target proportion includes:
determining, if detecting that the first to-be-adjusted current distribution proportion set for each battery cluster is within the distribution proportion constraint interval, the first to-be-adjusted current distribution proportion of each battery cluster within the distribution proportion constraint interval as the current distribution target proportion of each corresponding battery cluster.

In an optional embodiment of the present disclosure, the determining, according to whether the first to-be-adjusted current distribution proportion is within the distribution proportion constraint interval, the current distribution target proportion further includes:
adjusting, if detecting that the first to-be-adjusted current distribution proportion set for a battery cluster is not within the distribution proportion constraint interval, the capacity set critical value, re-determining, according to present remaining capacities of various battery clusters and an adjusted capacity set critical value, the first to-be-adjusted current distribution proportion set for each battery cluster, until the first to-be-adjusted current distribution proportion re-set for each battery cluster is within the distribution proportion constraint interval, and determining the first to-be-adjusted current distribution proportion of each battery cluster within the distribution proportion constraint interval as the current distribution target proportion of each corresponding battery cluster.

In an optional embodiment of the present disclosure, the determining, according to a battery-cluster parameter, a current distribution target proportion set for each battery cluster further includes:

determining, if detecting that an adjusted capacity set critical value is not within the capacity adjustment limiting range and that the first to-be-adjusted current distribution proportion re-set for the battery cluster is not within the distribution proportion constraint interval, a second to-be-adjusted current distribution proportion set for each battery cluster according to present remaining capacities of various battery clusters; and
determining, according to whether the second to-be-adjusted current distribution proportion is within the distribution proportion constraint interval, the current distribution target proportion.

In an optional embodiment of the present disclosure, the determining, according to whether the second to-be-adjusted current distribution proportion is within the distribution proportion constraint interval, the current distribution target proportion includes:

determining, if detecting that the second to-be-adjusted current distribution proportion set for each battery cluster is within the distribution proportion constraint interval, the second to-be-adjusted current distribution proportion of each battery cluster within the distribution proportion constraint interval as the current distribution target proportion of each corresponding battery cluster.

In an optional embodiment of the present disclosure, the battery-cluster parameter includes the distribution proportion constraint interval, and the distribution proportion constraint interval includes the distribution proportion constraint upper limit and the distribution proportion constraint lower limit; and

the determining, according to whether the second to-be-adjusted current distribution proportion is within the distribution proportion constraint interval, the current distribution target proportion further includes:

determining, if detecting that the second to-be-adjusted current distribution proportion set for a battery cluster is not within the distribution proportion constraint interval, a first quantity of battery clusters corresponding to battery clusters, of which the second to-be-adjusted current distribution proportion is greater than the distribution proportion constraint upper limit, and a second quantity of battery clusters corresponding to battery clusters, of which the second to-be-adjusted current distribution proportion is less than the distribution proportion constraint lower limit;

determining a distribution proportion adjustment value, by which the second to-be-adjusted current distribution proportion not within the distribution proportion constraint interval is adjusted to a nearest distribution proportion constraint upper limit or distribution proportion constraint lower limit, so as to obtain a distribution proportion adjustment total value corresponding to all battery clusters, of which the second to-be-adjusted current distribution proportion is not within the distribution proportion constraint interval; and

determining, according to a magnitude relationship between the distribution proportion adjustment total value and a preset distribution proportion adjustment threshold, the current distribution target proportion.

In an optional embodiment of the present disclosure, the distribution proportion adjustment value, by which the second to-be-adjusted current distribution proportion less than the distribution proportion constraint lower limit is adjusted to the distribution proportion constraint lower limit, is a negative value, and the distribution proportion adjustment value, by which the second to-be-adjusted current distribution proportion greater than the distribution proportion constraint upper limit is adjusted to the distribution proportion constraint upper limit, is a positive value.

In an optional embodiment of the present disclosure, the determining, according to a magnitude relationship between the distribution proportion adjustment total value and a preset distribution proportion adjustment threshold, the current distribution target proportion includes:

if the distribution proportion adjustment total value is greater than the preset distribution proportion adjustment threshold, determining, according to the distribution proportion constraint lower limit, the distribution proportion adjustment total value and the second quantity of battery clusters, the current distribution target proportion set for battery clusters of which the second to-be-adjusted current distribution proportion is not within the distribution proportion constraint interval, and determining, according to the present remaining capacities of the battery clusters, the current distribution target proportion set for battery clusters of which the second to-be-adjusted current distribution proportion is within the distribution proportion constraint interval.

In an optional embodiment of the present disclosure, the determining, according to the distribution proportion constraint lower limit, the distribution proportion adjustment total value and the second quantity of battery clusters, the current distribution target proportion set for battery clusters of which the second to-be-adjusted current distribution proportion is not within the distribution proportion constraint interval includes:

determining, using a ratio of the distribution proportion adjustment total value to the second quantity of battery clusters, a distribution proportion adjustment mean value; and

determining, using a sum of the distribution proportion constraint lower limit and the distribution proportion adjustment mean value, the current distribution target proportion set for battery clusters of which the second to-be-adjusted current distribution proportion is not within the distribution proportion constraint interval.

In an optional embodiment of the present disclosure, the determining, according to a magnitude relationship between the distribution proportion adjustment total value and a preset distribution proportion adjustment threshold, the current distribution target proportion further includes:

if the distribution proportion adjustment total value is less than or equal to the preset distribution proportion adjustment threshold, determining, according to the distribution proportion constraint upper limit, the distribution proportion adjustment total value and the first quantity of battery clusters, the current distribution target proportion set for battery clusters of which the second to-be-adjusted current distribution proportion is not within the distribution proportion constraint interval, and determining, according to present remaining capacities of battery clusters, the current distribution target proportion set for battery clusters of which the second to-be-adjusted current distribution proportion is within the distribution proportion constraint interval.

In an optional embodiment of the present disclosure, the determining, according to a magnitude relationship between the distribution proportion adjustment total value and a preset distribution proportion adjustment threshold, the current distribution target proportion further includes:

re-calculating, if detecting that the current distribution target proportion, set for a battery cluster of which the second to-be-adjusted current distribution proportion is not within the distribution proportion constraint interval, is not within the distribution proportion constraint interval, the distribution proportion adjustment total value corresponding to all battery clusters of which the current distribution target proportion is not within the distribution proportion constraint interval; and

detecting a magnitude relationship between a re-calculated distribution proportion adjustment total value and the preset distribution proportion adjustment threshold, and cyclically executing following processes, until a new current distribution target proportion, re-set for each battery cluster of which the current distribution target proportion is not within the distribution proportion constraint interval, is within the distribution proportion constraint interval:

re-determining, if the re-calculated distribution proportion adjustment total value is greater than the preset distribution proportion adjustment threshold, according to the distribution proportion constraint lower limit, the re-calculated distribution proportion adjustment total value and the second quantity of battery clusters, a new current distribution target proportion set for battery clusters of which the current distribution target proportion is not within the distribution proportion constraint interval; and

re-determining, if the re-calculated distribution proportion adjustment total value is less than or equal to the preset distribution proportion adjustment threshold, according to the distribution proportion constraint upper limit, the re-calculated distribution proportion adjustment total value and the first quantity of battery clusters, a new current distribution target proportion set for battery clusters of which the current distribution target proportion is not within the distribution proportion constraint interval.

In the second aspect, embodiments of the present disclosure further provide an analog circuit, configured to apply the current distribution method as in the above, where the analog circuit includes: a main relay, a first relay, a second relay, a third relay, a controlled current source and a controlled voltage source, and the controlled current source and the first relay are connected in series to form a first controlled branch, the controlled voltage source and the second relay are connected in series to form a second controlled branch, the first controlled branch and the second controlled branch are connected in parallel and then connected in series with the main relay, and the third relay and the controlled current source are connected in parallel.

In the current distribution method and the analog circuit provided in the embodiments of the present disclosure, firstly, the distribution proportion constraint interval set for each battery cluster is determined according to the total quantity of battery clusters of a plurality of battery clusters connected in parallel in the battery energy storage system, then, the current distribution target proportion set for each battery cluster is determined according to the battery-cluster parameter, where the current distribution target proportion is within the distribution proportion constraint interval, and the battery-cluster parameter includes at least one of the following: the present remaining capacity of the battery cluster, the capacity set critical value and the distribution proportion constraint interval; and finally, the current is distributed to various battery clusters according to the current distribution target proportion.

Compared with the current control algorithm of calculating the current distribution proportion set for various battery clusters by only considering different states of charge or only considering different battery capacities in the prior art, in the embodiments of the present disclosure, the distribution proportion constraint interval set for each battery cluster is firstly defined, in this way, no matter whether the initial states of charge of various battery clusters are excessively different or not, the current distribution target proportion set for each battery cluster can be controlled to be within the distribution proportion constraint interval, thus avoiding excessively different current distribution target proportions of various battery clusters in a case where the initial states of charge are excessively different, which not only enables the states of charge of various battery clusters to quickly reach consistency, but also can avoid the problem that oscillation outside the battery energy storage system tends to cause overload of the battery energy storage system when the current distribution proportions are excessively different. Then the current distribution target proportion set for each battery cluster is determined according to the battery-cluster parameter, where the battery-cluster parameter includes at least one of the following: the present remaining capacity of the battery cluster, the capacity set critical value and the distribution proportion constraint interval. The direct-current converter in the battery energy storage system can distribute current to various battery clusters accurately according to the current distribution target proportion by the above method, and the current distribution target proportion can be configured as a limiting proportion within the distribution proportion constraint interval, so that the direct-current converter performs charging and discharging at an allowable limiting current, which can further ensure the battery clusters with different capacities to quickly reach balance during operation, thus achieving an effect of improving stability and reliability of the battery energy storage system.

In order to make the above objectives, features and advantages of the present disclosure more apparent and more understandable, preferred embodiments are particularly illustrated below to give detailed description in conjunction with the drawings.

## BRIEF DESCRIPTION OF DRAWINGS

In order to more clearly illustrate technical solutions of embodiments of the present disclosure, drawings which need to be used in the embodiments will be briefly introduced below, and it should be understood that the drawings merely show some embodiments of the present disclosure; therefore, they should not be construed as limitation to the scope, and those ordinarily skilled in the art still could obtain other relevant drawings according to these drawings, without using any inventive efforts.

FIG. 1 is a flowchart of a current distribution method provided in embodiments of the present disclosure;
FIG. 2 is a flowchart of another current distribution method provided in embodiments of the present disclosure;
FIG. 3 is a schematic view of a first state of an analog circuit provided in embodiments of the present disclosure; and
FIG. 4 is a schematic view of a second state of an analog circuit provided in embodiments of the present disclosure.

## DETAILED DESCRIPTION OF EMBODIMENTS

In order to make objectives, technical solutions and advantages of the embodiments of the present disclosure clearer, the technical solutions in the embodiments of the present disclosure will be described clearly and completely below in conjunction with drawings in the embodiments of the present disclosure, and apparently, the embodiments described are merely some but not all embodiments of the present disclosure. Generally, components in the embodiments of the present disclosure, as described and shown in the drawings herein, may be arranged and designed in various different configurations. Therefore, the detailed description below of the embodiments of the present disclosure provided in the drawings is not intended to limit the claimed scope of the present disclosure, but merely illustrates chosen embodiments of the present disclosure. All of other embodiments obtained by those skilled in the art based on the embodiments of the present disclosure without using any inventive efforts shall fall within the scope of protection of the present disclosure.

In the present description, the terms "one", "a (an)", "the" and "said" are used to mean that there are one or more elements/components/etc.; the terms "comprising" and "having" are used to mean open-ended inclusion and mean that there may also be additional elements/-components/etc. in addition to the listed elements/components/etc.; and the terms "first", "second", etc. are used merely as labels, and are not intended to limit the number of objects.

It should be understood that, in the embodiments of the present disclosure, "at least one" refers to one or more, and "a plurality of" refers to two or more. "And/or" is only an association relationship describing associated objects, and indicates that there may be three relationships, for example, "A and/or B" may indicate three cases: A exists alone, both A and B exist, and B exists alone. The character "/" generally indicates that the associated objects before and after it have an "or" relationship. "Comprising A, B and/or C" means comprising any one, two, or three of A, B, and C.

It should be understood that, in the embodiments of the present disclosure, "B corresponding to A", "B that corresponds to A", "A being corresponding to B" or "B being corresponding to A" indicates that B is associated with A, and B can be determined according to A. Determining B according to A does not mean determining B only according to A, but B can also be determined according to A and/or other information.

Besides, only some but not all embodiments of the present disclosure are described. Generally, components in the embodiments of the present disclosure described and shown in the drawings herein can be arranged and designed in various different configurations. Therefore, the following detailed description of the embodiments of the present disclosure provided in the drawings is not intended to limit the claimed scope of the present disclosure, but merely represents chosen embodiments of the present disclosure. All of other embodiments obtained by those skilled in the art based on the embodiments of the present disclosure without using any inventive efforts shall fall within the scope of protection of the present disclosure.

Firstly, a battery energy storage system is composed of a plurality of battery clusters connected in parallel. In a process of overcharging or overdischarging the battery clusters, irreversible capacity attenuation will be generated, and overcharge will also bring about potential safety hazards of combustion and even explosion. In order to avoid overcharge or overdischarge of the battery clusters, a direct-current converter in the battery energy storage system is usually used to realize precise control over charging and discharging currents of the battery clusters.

However, in a present current control algorithm, current distribution proportions set for various battery clusters are calculated by only considering different states of charge or only considering different battery capacities, so that in order to reach a balance state, at least one charge operating condition, one discharge operating condition, one cycle operating condition or multiple cycle operating conditions are required, and the battery energy storage system is difficult to quickly reach the balance state in the charging and discharging processes.

Moreover, in a case where initial states of charge are excessively different, for example, in a case where there is partial overload or partial standing, currents are excessively different, and further, a temperature difference influence due to excessively different currents is also great, so that inconsistency of the battery clusters is amplified in long-term operation, thus greatly affecting an overall service lifetime, aging attenuation, availability, discharge depth, and the like of the battery energy storage system.

Moreover, in order to enable states of charge of various battery clusters to reach consistency, excessively different current distribution proportions may be obtained through the present current control algorithm, and when the current distribution proportions are excessively different, oscillation outside the battery energy storage system tends to cause a problem of overload of the battery energy storage system.

In view of this, embodiments of the present disclosure provide a current distribution method, which can ensure battery clusters with different capacities to quickly reach balance during operation, thus achieving an effect of improving stability and reliability of a battery energy storage system.

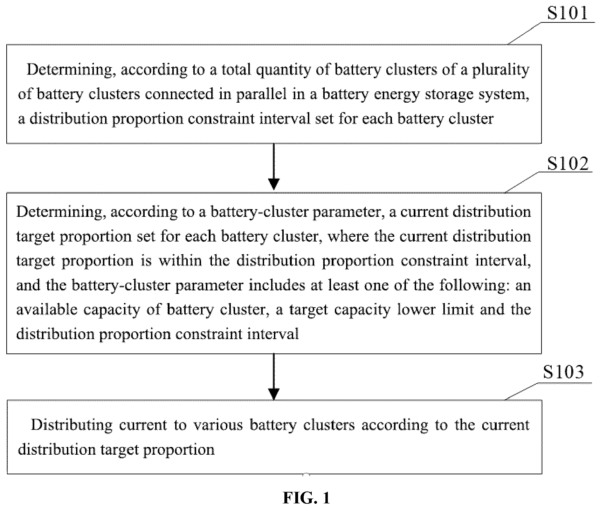

Referring to FIG. 1, FIG. 1 is a flowchart of a current distribution method provided in embodiments of the present disclosure. As shown in FIG. 1, the current distribution method provided in embodiments of the present disclosure includes:

S101, determining, according to a total quantity of battery clusters of a plurality of battery clusters connected in parallel in a battery energy storage system, a distribution proportion constraint interval set for each battery cluster;

S102, determining, according to a battery-cluster parameter, a current distribution target proportion set for each battery cluster, where the current distribution target proportion is within the distribution proportion constraint interval, and the battery-cluster parameter includes at least one of the following: a present remaining capacity of the battery cluster, a capacity set critical value and the distribution proportion constraint interval; and

S103, distributing current to various battery clusters according to the current distribution target proportion.

In step S101, the battery energy storage system includes a plurality of battery clusters connected in parallel and a direct-current converter. The battery clusters each include a plurality of cell batteries connected in series or in parallel. Even after strict capacity matching, various cell batteries still have a certain initial capacity difference. Moreover, in a using process, due to differences in temperature and manufacturing process of the cell batteries, capacity attenuation of the cell batteries of the battery clusters may be inconsistent in the using process. The direct-current converter can convert a direct-current (DC) power supply into a direct-current (or approximately direct-current) power supply of different voltages, in which many high-speed switch diodes (rectifiers) are included, and the high-speed switching diodes have a fast switching speed and can complete a switching operation in a short period of time, so as to improve a response speed of a circuit. In the above, the current distribution method as shown in FIG. 1 can be operated in the direct-current converter, and further accurate control over charging and discharging currents of the battery clusters is realized through the direct-current converter, so as to avoid overcharge or overdischarge of the battery cluster.

The total quantity of battery clusters refers to a total number of all the battery clusters included in the battery energy storage system. According to the total quantity of battery clusters, not only a current equipartition proportion set for each battery cluster can be determined, but also the distribution proportion constraint interval set for each battery cluster can be determined.

Specifically, step S101 includes:
step S1011, acquiring the total quantity of battery clusters of a plurality of battery clusters connected in parallel in the battery energy storage system and an overload constraint proportion of the battery energy storage system, where the overload constraint proportion characterizes a preset proportion by which a current of the battery clusters exceeds a rated current range during charging or discharging.

Herein, overload means that the battery energy storage system can still operate beyond the rated current range in a certain abnormal state. In the above, the abnormal state refers to a state in which the battery energy storage system operates short of a cluster but maintains constant power/current output. The overload constraint proportion characterizes a preset proportion by which the current of the battery clusters exceeds the rated current range during charging or discharging. That is to say, the overload constraint proportion represents a preset proportion by which the current of the battery clusters is allowed to exceed a first current specified value during charging or a preset proportion by which the current of the battery cluster is allowed to be lower than a second current specified value during discharging, where the second current specified value is less than the first current specified value, and a range between the first current specified value and the second current specified value forms the rated current range.

Exemplarily, the overload constraint proportion ranges from 0 to 1, and specifically, a value of the overload constraint proportion can be 0.1.

Step S1012, determining, according to the overload constraint proportion, a distribution proportion constraint upper limit and a distribution proportion constraint lower limit of the battery energy storage system, so as to determine the distribution proportion constraint interval set for each battery cluster.

Specifically, the distribution proportion constraint upper limit and the distribution proportion constraint lower limit are determined as two endpoint values of the distribution proportion constraint interval.

Exemplarily, step S1012 specifically includes: step S1012a, determining, according to the overload constraint proportion, a distribution proportion constraint upper limit total value and a distribution proportion constraint lower limit total value of the battery energy storage system.

Herein, since the overload constraint proportion is between 0 and 1, the distribution proportion constraint upper limit total value is a sum of 1 and the overload constraint proportion, and the distribution proportion constraint lower limit total value is a difference between 1 and the overload constraint proportion.

Step S1012b, determining, using ratios of the distribution proportion constraint upper limit total value and the distribution proportion constraint lower limit total value to the total quantity of battery clusters, the distribution proportion constraint upper limit and the distribution proportion constraint lower limit set for each battery cluster.

Herein, each battery cluster has the same distribution proportion constraint interval.

Exemplarily, the total quantity of battery clusters is defined as n, the overload constraint proportion is limit, $I_{pct\_max}$ represents the distribution proportion constraint upper limit, and $I_{pct\_min}$ represents the distribution proportion constraint lower limit. The distribution proportion constraint upper limit $I_{pct\_max}$ and the distribution proportion constraint lower limit $I_{pct\_min}$ are calculated by following formulas:

$$I_{pct\_max} = \frac{1 + \text{limit}}{n}$$

$$I_{pct\_min} = \frac{1 - \text{limit}}{n}$$

For example, according to an actual configuration parameter, etc. of the battery cluster, limit can be set to be 0.1, and then

$$I_{pct\_max} = \frac{1.1}{n}$$

$$I_{pct\_min} = \frac{0.9}{n}$$

In the embodiments of the present disclosure, according to an actual operating condition of the battery clusters, the overload constraint proportion can be adjusted in real time, and further the distribution proportion constraint upper limit and the distribution proportion constraint lower limit can be flexibly set. Within this distribution proportion constraint interval, current can be distributed according to the current distribution target proportion set for each battery cluster. As a range of the current distribution target proportion is locked, the stability and reliability of the battery energy storage system can be further improved.

In step S102, the battery-cluster parameter refers to a parameter associated with current distribution of the battery cluster. This parameter can be an attribute property of the battery cluster, such as a present remaining capacity of the battery cluster. This parameter can be a numerical value set in advance according to the attribute property of the battery cluster, where the preset numerical value can be adjusted in real time and this numerical value is applicable to each battery cluster, for example, each battery cluster is corresponding to the same capacity set critical value. This parameter can also be a numerical value calculated according to the attribute property of the battery cluster, for example, the distribution proportion constraint interval calculated according to the total quantity of battery clusters and the overload constraint proportion.

Herein, the current distribution target proportion set for each battery cluster is determined according to the battery-cluster parameter, and this current distribution target proportion is within the distribution proportion constraint interval. That is, the current distribution target proportion set for each battery cluster can be accurately determined according to the battery-cluster parameter, in this way, current is distributed to various battery clusters according to the current distribution target proportion, and the battery clusters with different capacities can reach balance as soon as possible during operation.

Moreover, in a case where the states of charge of various battery clusters are excessively different, the current distribution target proportions of various battery clusters are different, but the differences of the current distribution target proportions are ensured to be within the distribution proportion constraint interval, so that the problem of overload of the battery energy storage system caused by outside oscillation is avoided to the greatest extent, while enabling the states of charge of various battery clusters to reach consistency at a relatively high speed, and balance management and safe use can be realized, thus further prolonging the service lifetime of the battery clusters in the battery energy storage system.

In a preferred embodiment, the battery-cluster parameter includes the present remaining capacity of the battery cluster and the capacity set critical value. Herein, the present remaining capacity refers to a maximum chargeable or dischargeable capacity of the battery cluster in a present operation state, and the capacity set critical value characterizes that various battery clusters in the battery energy storage system are converged to a consistent state of charge most quickly. Exemplarily, the capacity set critical value can be a minimum value of present remaining capacities of a plurality of battery clusters.

Herein, the capacity set critical value is set with a capacity adjustment limiting range in advance, and the capacity set critical value, when being adjusted, cannot exceed the capacity adjustment limiting range. Specifically, when the plurality of battery clusters in the battery energy storage system are in a discharge operating condition or a charge operating condition, the capacity adjustment limiting range is corresponding to a range between 0 and the capacity set critical value.

In the above, the step S102 specifically includes:

step 1021, determining, according to the present remaining capacities of various battery clusters and the capacity set critical value, a first to-be-adjusted (adjusted) current distribution proportion set for each battery cluster.

Specifically, a capacity difference between the present remaining capacity and the capacity set critical value of each battery cluster is calculated, a sum of capacity differences corresponding to all the battery clusters is calculated. For each battery cluster, a ratio of the capacity difference corresponding to this battery cluster to the sum of the capacity differences is calculated, and this ratio is determined as the first to-be-adjusted current distribution proportion.

Exemplarily, it is defined that the first to-be-adjusted current distribution proportion of an $i^{th}$ battery cluster is $I_{1i,\,pct}$, the capacity set critical value is min_cap, the present remaining capacity is $cap_i$, and the total quantity of battery clusters is n, and then, the first to-be-adjusted current distribution proportion $I_{1i,\,pct}$ of the $i^{th}$ battery cluster is calculated by a formula as follows:

$$I_{1i,pct} = \frac{cap_i - min\_cap}{\sum_{i=1}^{n}(cap_i - min\_cap)}$$

Through the above formula, the first to-be-adjusted current distribution proportion of each corresponding battery cluster can be calculated, and a purpose of quickly distributing current to the battery clusters can be realized according to this first to-be-adjusted current distribution proportion.

Step 1022, determining, according to whether the first to-be-adjusted current distribution proportion is within the distribution proportion constraint interval, the current distribution target proportion.

In the above, the step S1022 specifically includes:

step 1022a, determining, if detecting that the first to-be-adjusted current distribution proportion set for each battery cluster is within the distribution proportion constraint interval, the first to-be-adjusted current distribution proportion of each battery cluster within the distribution proportion constraint interval as the current distribution target proportion of each corresponding battery cluster.

Herein, if the first to-be-adjusted current distribution proportion of each corresponding battery cluster is within the distribution proportion constraint interval, the first to-be-adjusted current distribution proportion currently calculated can be determined as the current distribution target proportion, so as to distribute current to the battery clusters according to the first to-be-adjusted current distribution proportion.

Step 1022b, adjusting, if detecting that the first to-be-adjusted current distribution proportion set for a battery cluster is not within the distribution proportion constraint interval, the capacity set critical value, re-determining, according to the present remaining capacities of various battery clusters and an adjusted capacity set critical value, the first to-be-adjusted current distribution proportion set for each battery cluster, until the first to-be-adjusted current distribution proportion re-set for each battery cluster is within the distribution proportion constraint interval, and determining the first to-be-adjusted current distribution proportion of each battery cluster within the distribution proportion constraint interval as the current distribution target proportion of each corresponding battery cluster.

That is to say, when detecting that the first to-be-adjusted current distribution proportion corresponding to a battery cluster is not within the distribution proportion constraint interval, the capacity set critical value can be adjusted. Exemplarily, the capacity set critical value can be adjusted to be small, and then according to the formula for calculating the first to-be-adjusted current distribution proportion in step 1021, the first to-be-adjusted current distribution proportion set for each battery cluster is re-calculated, until the capacity set critical value is adjusted to a minimum value of the capacity adjustment limiting range, for example, the minimum value of the capacity adjustment limiting range is 0. If detecting, under a condition that the capacity set critical value is within the capacity adjustment limiting range, the first to-be-adjusted current distribution proportion of each corresponding battery cluster to be within the distribution proportion constraint interval, the first to-be-adjusted current distribution proportion currently determined can be determined as the current distribution target proportion.

Step 1023, determining, if detecting that the adjusted capacity set critical value is not within the capacity adjustment limiting range and that the first to-be-adjusted current distribution proportion re-set for the battery cluster is not within the distribution proportion constraint interval, a second to-be-adjusted current distribution proportion set for each battery cluster according to the present remaining capacities of various battery clusters.

Herein, the present remaining capacities of all the battery clusters are summed to obtain a sum of present remaining capacities, and for each battery cluster, a ratio of the present remaining capacity corresponding to this battery cluster to the sum of present remaining capacities is calculated, and this ratio is determined as the second to-be-adjusted current distribution proportion.

Exemplarily, the second to-be-adjusted current distribution proportion of the $i^{th}$ battery cluster is defined as $I_{2i,\ pct}$, and then, the second to-be-adjusted current distribution proportion $I_{2i,\ pct}$ of the $i^{th}$ battery cluster is calculated by a formula as follows:

$$I_{2i,pct} = \frac{cap_i}{\sum_{i=1}^{n} cap_i}$$

Through the above formula, the second to-be-adjusted current distribution proportion of each corresponding battery cluster can be calculated, and the purpose of quickly distributing current to the battery clusters can be realized according to this second to-be-adjusted current distribution proportion.

Step 1024, determining, according to whether the second to-be-adjusted current distribution proportion is within the distribution proportion constraint interval, the current distribution target proportion.

In the above, the step S1024 specifically includes:
step 1024a, determining, if detecting that the second to-be-adjusted current distribution proportion set for each battery cluster is within the distribution proportion constraint interval, the second to-be-adjusted current distribution proportion of each battery cluster within the distribution proportion constraint interval as the current distribution target proportion of each corresponding battery cluster.

Herein, if the second to-be-adjusted current distribution proportion of each corresponding battery cluster is within the distribution proportion constraint interval, the second to-be-adjusted current distribution proportion currently calculated can be determined as the current distribution target proportion, so as to distribute current to the battery clusters according to the second to-be-adjusted current distribution proportion.

Step 1024b, determining, if detecting that the second to-be-adjusted current distribution proportion set for a battery cluster is not within the distribution proportion constraint interval, a first quantity of battery clusters corresponding to battery clusters, of which the second to-be-adjusted current distribution proportion is greater than the distribution proportion constraint upper limit, and a second quantity of battery clusters corresponding to battery clusters, of which the second to-be-adjusted current distribution proportion is less than the distribution proportion constraint lower limit.

In the above, the battery-cluster parameter includes the distribution proportion constraint interval, and the distribution proportion constraint interval includes the distribution proportion constraint upper limit and the distribution proportion constraint lower limit. The first quantity of battery clusters can be determined according to the distribution proportion constraint upper limit, and the second quantity of battery clusters can be determined according to the distribution proportion constraint lower limit.

Step 1024c, determining a distribution proportion adjustment value, by which the second to-be-adjusted current distribution proportion not within the distribution proportion constraint interval is adjusted to a nearest distribution proportion constraint upper limit or distribution proportion constraint lower limit, so as to obtain a distribution proportion adjustment total value corresponding to all battery clusters, of which the second to-be-adjusted current distribution proportion is not within the distribution proportion constraint interval.

In the above, the distribution proportion adjustment value, by which the second to-be-adjusted current distribution proportion less than the distribution proportion constraint lower limit is adjusted to the distribution proportion constraint lower limit, is a negative value, and the distribution proportion adjustment value, by which the second to-be-adjusted current distribution proportion greater than the distribution proportion constraint upper limit is adjusted to the distribution proportion constraint upper limit, is a positive value.

Herein, a difference between the second to-be-adjusted current distribution proportion and the nearest distribution proportion constraint upper limit or the nearest distribution proportion constraint lower limit is calculated, and this difference is the distribution proportion adjustment value. Specifically, this difference is positive or negative, that is, by subtracting the distribution proportion constraint lower limit from the second to-be-adjusted current distribution proportion less than the distribution proportion constraint lower limit, the distribution proportion adjustment value obtained is a negative value; and by subtracting the distribution proportion constraint upper limit from the second to-be-adjusted current distribution proportion greater than the distribution proportion constraint upper limit, the distribution proportion adjustment value obtained is a positive value. The distribution proportion adjustment values corresponding to all battery clusters, of which the second to-be-adjusted current distribution proportion is not within the distribution proportion constraint interval, are summed, so as to obtain the distribution proportion adjustment total value. Herein, since there are positive and negative distribution proportion adjustment values, the calculated distribution proportion adjustment total value can be a positive value or a negative value.

Step 1025, determining, according to a magnitude relationship between the distribution proportion adjustment total value and a preset distribution proportion adjustment threshold, the current distribution target proportion.

In the above, the step S1025 specifically includes:

step 1025a, if the distribution proportion adjustment total value is less than or equal to the preset distribution proportion adjustment threshold, determining, according to the distribution proportion constraint lower limit, the distribution proportion adjustment total value and the second quantity of battery clusters, the current distribution target proportion set for battery clusters of which the second to-be-adjusted current distribution proportion is not within the distribution proportion constraint interval, and determining, according to the present remaining capacities of battery clusters, the current distribution target proportion set for battery clusters of which the second to-be-adjusted current distribution proportion is within the distribution proportion constraint interval.

Exemplarily, the preset distribution proportion adjustment threshold can be 0. In the above, for the second to-be-adjusted current distribution proportions corresponding to various battery clusters calculated through step 1023, the second to-be-adjusted current distribution proportions corresponding to part or all of the battery clusters are not within the distribution proportion constraint interval, and then, for battery clusters of which the second to-be-adjusted current distribution proportions are not within the distribution proportion constraint interval, the current distribution target proportion is calculated using the new calculation method involved in step 1025, while for battery clusters of which the second to-be-adjusted current distribution proportions are within the distribution proportion constraint interval, the current distribution target proportions are still calculated using the calculation method involved in step 1023.

Herein, if the distribution proportion adjustment total value is less than or equal to the preset distribution proportion adjustment threshold, for a battery cluster of which the second to-be-adjusted current distribution proportion is not within the distribution proportion constraint interval, the current distribution target proportion is determined by a calculation method as follows:
determining, using a ratio of the distribution proportion adjustment total value to the second quantity of battery clusters, a distribution proportion adjustment mean value; and determining, using a sum of the distribution proportion constraint lower limit and the distribution proportion adjustment mean value, the current distribution target proportion set for battery clusters of which the second to-be-adjusted current distribution proportion is not within the distribution proportion constraint interval.

Exemplarily, it is defined that the current distribution target proportion of the $i^{th}$ battery cluster is $I_{32i,\ pct}$, the second quantity of battery clusters is n2, and the distribution proportion adjustment total value is Vol, and then the current distribution target proportion $I_{32i,\ pct}$ of the $i^{th}$ battery cluster is calculated by a formula as follows:

$$\left(I_{32i,pct} = I_{pct\_min} + \frac{1}{n2} * Vol\right)$$

Step 1025b, if the distribution proportion adjustment total value is less than or equal to the preset distribution proportion adjustment threshold, determining, according to the distribution proportion constraint upper limit, the distribution proportion adjustment total value and the first quantity of battery clusters, the current distribution target proportion set for battery clusters of which the second to-be-adjusted current distribution proportion is not within the distribution proportion constraint interval, and determining, according to the present remaining capacities of battery clusters, the current distribution target proportion set for battery clusters of which the second to-be-adjusted current distribution proportion is within the distribution proportion constraint interval.

Herein, if the distribution proportion adjustment total value is less than or equal to the preset distribution proportion adjustment threshold, for battery clusters of which the second to-be-adjusted current distribution proportions are not within the distribution proportion constraint interval, the current distribution target proportion is determined by a calculation method as follows:
determining, using a ratio of the distribution proportion adjustment total value to the first quantity of battery clusters, a distribution proportion adjustment mean value; and determining, using a sum of the distribution proportion constraint upper limit and the distribution proportion adjustment mean value, the current distribution target proportion set for battery clusters of which the second to-be-adjusted current distribution proportion is not within the distribution proportion constraint interval.

Exemplarily, it is defined that the current distribution target proportion of the $i^{th}$ battery cluster is $I_{31i,\ pct}$, the first quantity of battery clusters is n1, and the distribution proportion adjustment total value is Vol, and then the current distribution target proportion $I_{31i,\ pct}$ of the $i^{th}$ battery cluster is calculated by a formula as follows:

$$\left(I_{31i,pct} = I_{pct\_max} + \frac{1}{n1} * Vol\right)$$

It should be noted that, when the second to-be-adjusted current distribution proportion is not within the distribution proportion constraint interval, according to the magnitude relationship between the distribution proportion adjustment total value and the preset distribution proportion adjustment threshold, the current distribution target proportion is directly calculated through step 1025a or step 1025b.

Step 1025c, re-calculating, if detecting that the current distribution target proportion, set for a battery cluster of which the second to-be-adjusted current distribution proportion is not within the distribution proportion constraint interval, is not within the distribution proportion constraint interval, the distribution proportion adjustment total value corresponding to all battery clusters of which the current distribution target proportion is not within the distribution proportion constraint interval; and detecting a magnitude relationship between a re-calculated distribution proportion adjustment total value and the preset distribution proportion adjustment threshold, and cyclically executing step 1025a and/or step 1025b, until a new current distribution target proportion, re-set for each battery cluster of which the current distribution target proportion is not within the distribution proportion constraint interval, is within the distribution proportion constraint interval.

Through the step 1025c, the current distribution target proportion finally obtained can be ensured to be within the distribution proportion constraint interval, without further calculation by other methods.

By the above method, the current distribution target proportion can be determined by different calculation methods under different parameter conditions, so that current can be accurately distributed to various battery clusters according to this current distribution target proportion, thus enabling the battery clusters with different capacities to reach balance as soon as possible during operation.

In step S103, the current is distributed to various battery clusters according to the current distribution target proportion determined in step S102. In this way, regardless of whether the initial states of charge of various battery clusters are excessively different or not, quick distribution can be performed according to a maximum current output capability of the distribution proportion constraint interval within a constraint range corresponding to the distribution proportion constraint interval, so that various battery clusters of the battery energy storage system reach balance at a maximum speed within an allowable current range.

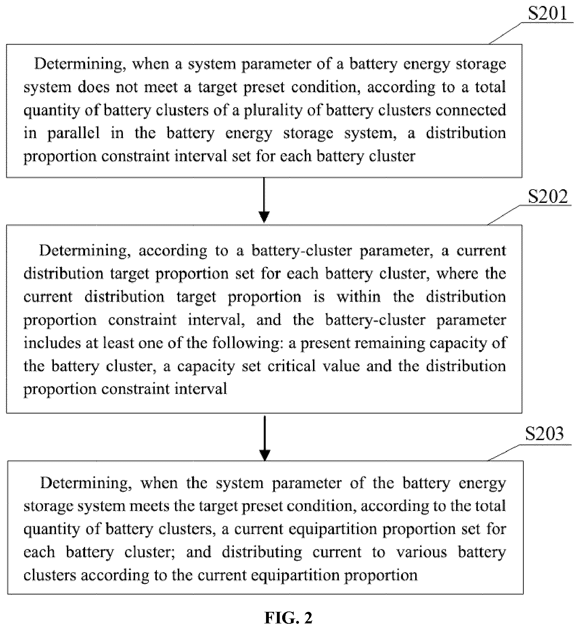

Referring to FIG. 2, FIG. 2 is a flowchart of another current distribution method provided in embodiments of the present disclosure. As shown in FIG. 2, the current distribution method provided in the embodiments of the present disclosure includes:

S201, determining, where a system parameter of a battery energy storage system does not meet a current equipartition condition, according to a total quantity of battery clusters of a plurality of battery clusters connected in parallel in the battery energy storage system, a distribution proportion constraint interval set for each battery cluster;

S202, determining, according to a battery-cluster parameter, a current distribution target proportion set for each battery cluster, where the current distribution target proportion is within the distribution proportion constraint interval, and the battery-cluster parameter includes at least one of the following: a present remaining capacity of the battery cluster, a capacity set critical value and the distribution proportion constraint interval; and distributing current to various battery clusters according to the current distribution target proportion; and

S203, determining, where the system parameter of the battery energy storage system meets the current equipartition condition, according to the total quantity of battery clusters, a current equipartition proportion set for each battery cluster; and distributing current to various battery clusters according to the current equipartition proportion.

In the above, for description of step S202, reference can be made to step S102, which will not be elaborated herein.

In step S201, the current equipartition condition includes one of the following: the battery energy storage system is in a standing operating condition, a direct-current converter in the battery energy storage system is in a fault state, a minimum state of charge of the battery energy storage system in discharging is not greater than a first preset proportion, and a maximum state of charge of the battery energy storage system in charging is not less than a second preset proportion, where the first preset proportion is less than the second preset proportion, and a difference between the states of charge is less than a preset difference threshold, where the difference between the states of charge represents a difference between the maximum state of charge and the minimum state of charge of all battery clusters currently having been connected to a direct-current bus.

In the above, a battery management system (BMS) collects statistics of the total quantity of battery clusters of a plurality of battery clusters connected in parallel, initial states of charge of various battery clusters, present remaining capacities of various battery clusters, a system operating condition, and the like. In the above, the system operating condition includes a standing operating condition, a charge operating condition or a discharge operating condition. According to the above data collected by the BMS, it is judged whether the system parameter of the battery energy storage system meets the current equipartition condition.

Exemplarily, in order to prevent an excessive capacity difference between the present remaining capacities of various battery clusters in the battery energy storage system, a small value, for example, 1%, is selected as the preset difference threshold.

Herein, if the system parameter of the battery energy storage system does not meet the above current equipartition condition, according to the total quantity of battery clusters of a plurality of battery clusters connected in parallel in the battery energy storage system, a distribution proportion constraint interval set for each battery cluster is determined, and reference can be made to step S 101 for specific implementation, which will not be elaborated herein.

Further, in step S203, when the system parameter of the battery energy storage system meets the current equipartition condition, the current equipartition proportion set for each battery cluster is determined according to the total quantity of battery clusters; and current is distributed to various battery clusters according to the current equipartition proportion.

That is to say, when the battery energy storage system is in the standing operating condition, the direct-current converter in the battery energy storage system is in the fault state, the minimum state of charge of the battery energy storage system in discharging is not greater than the first preset proportion, and the maximum state of charge of the battery energy storage system in charging is not less than the second preset proportion, where the first preset proportion is less than the second preset proportion, exemplarily, the first preset proportion is 10%, and the second preset proportion is 90%, and the difference between the states of charge is less than the preset difference threshold, where the difference between the states of charge represents a difference between the maximum state of charge and the minimum state of charge of all battery clusters currently having been connected to the direct-current bus, the current equipartition proportion set for each battery cluster is directly determined according to the total quantity of battery clusters.

Exemplarily, the current equipartition proportion is determined by a following formula:

$$ I_{i,pct} = \frac{1}{n} $$

In the above, n represents the total quantity of battery clusters.

The current equipartition proportion set for each battery cluster is determined by the above method, so that the quick distribution of current to various battery clusters can be realized, which is simple and convenient.

In the embodiments of the present disclosure, the distribution proportion constraint interval set for each battery cluster is firstly defined, in this way, no matter whether the initial states of charge of various battery clusters are excessively different or not, the current distribution target proportion set for each battery cluster can be controlled to be within the distribution proportion constraint interval, thus avoiding excessively different current distribution target proportions of various battery clusters in a case where the initial states of charge are excessively different, which not only enables the states of charge of the battery clusters to quickly reach consistency, but also can avoid the problem that oscillation outside the battery energy storage system tends to cause overload of the battery energy storage system when the current distribution proportions are excessively different. Then the current distribution target proportion set for each battery cluster is determined according to the battery-cluster parameter, where the battery-cluster parameter includes at least one of the following: the present remaining capacity of the battery cluster, the capacity set critical value and the distribution proportion constraint interval. The direct-current converter in the battery energy storage system can distribute current to various battery clusters accurately according to the current distribution target proportion by the above method, and the current distribution target proportion can be configured as a limiting proportion within the distribution proportion constraint interval, so that the direct-current converter performs charging and discharging at an allowable limiting current, which can further ensure the battery clusters with different capacities to quickly reach balance during operation, thus achieving an effect of improving stability and reliability of the battery energy storage system.

In relevant solutions, an actual DC/DC includes many high-speed switching tubes, and it is relatively difficult to obtain an ideal result in a short period of time by a simulation means, resulting in a slow simulation speed. Especially for series DC/DC in the battery energy storage system, because a circuit structure of the series DC/DC is relatively complex, directly verifying operation of the current distribution method will result in a slow verification speed, and it is difficult to obtain a final verification result in a short period of time. In addition, as an ideal current source has infinitely large internal resistance and an ideal voltage source has infinitely small internal resistance, the ideal current source cannot be opened and the ideal voltage source cannot be short-circuited, which causes a circuit modeling error and failure of calculation.

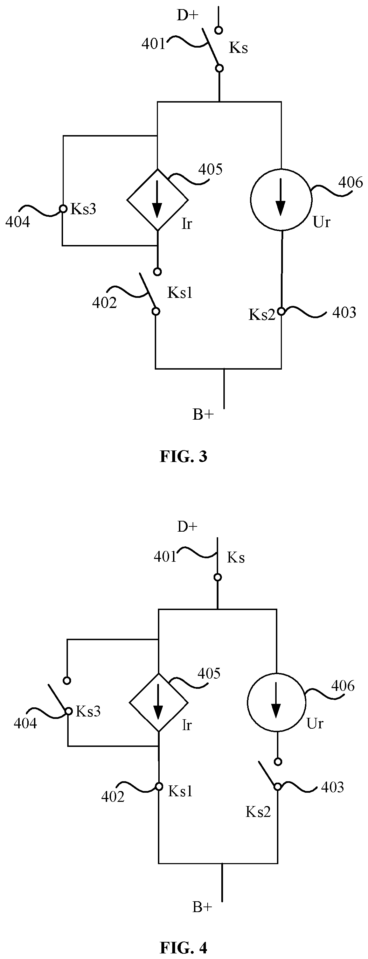

Based on this, embodiments of the present disclosure provide an analog circuit configured to apply the current distribution method as shown in FIG. 1 or FIG. 2. As shown in FIG. 3 or FIG. 4, the analog circuit includes: a main relay 401, a first relay 402, a second relay 403, a third relay 404, a controlled current source 405 and a controlled voltage source 406. The controlled current source 405 and the first relay 402 are connected in series to form a first controlled branch. The controlled voltage source 406 and the second relay 403 are connected in series to form a second controlled branch. The first controlled branch and the second controlled branch are connected in parallel and then connected in series with the main relay 401. The third relay 404 and the controlled current source 405 are connected in parallel.

Herein, the above analog circuit is used to be equivalent to series connection of the battery clusters and DC/DC in the battery energy storage system.

In the embodiments of the present disclosure, decoupling control over voltage and current is realized through the ideal current source, the ideal voltage source and the relays, and a simulation calculation problem caused by infinitely large/small internal resistance of an ideal power supply is avoided. By applying a current distribution algorithm as shown in FIG. 1 or FIG. 2 to the analog circuit above, it can be realized that series DC/DC charges and discharges with an allowable limiting current; moreover, in a case where states of charge are excessively different, the current distribution target proportions of various battery clusters will not be excessively different, so that the states of charge of various battery clusters reach consistency at a maximum speed, and the problem of overload of the battery energy storage system caused by outside oscillation can be maximally avoided. Meanwhile, it can also avoid the problem that it is difficult to obtain a final verification result in a short period of time caused by verifying the operation of the current distribution method in the embodiments of the present disclosure using the series DC/DC with a complex circuit structure in the prior art.

As shown in FIG. 3, the analog circuit is in a first state, in which case no-load voltage regulation can be performed.

DC/DC has a voltage regulation capability of 10 V-20 V. When the main relay Ks is disconnected, series DC/DC equivalent to the analog circuit is a series controlled voltage source, with a default value of 10 V, the relay Ks1 connected in series with the controlled current source 405 is in a state consistent with that of the main relay Ks (disconnected), the relay Ks2 connected in series with the controlled voltage source 406 is in a state opposite to that of the main relay Ks (closed); therefore, the series DC/DC equivalent to the analog circuit is represented by the controlled voltage source 406 being connected in series between the main relay Ks and a positive electrode of a battery, and a voltage inside the main relay Ks is a voltage of the battery and a voltage of the controlled voltage source 406. Because the ideal current source has infinitely large internal resistance and is not allowed to be opened, it is shorted through the relay Ks3, and a state of the relay Ks3 is opposite to that of the main relay Ks.

As shown in FIG. 4, the analog circuit is in a second state, in which case current regulation can be performed.

When a voltage meets a closing condition and the main relay Ks is closed, the relay Ks1 is consistent with the main relay Ks (closed), and the relay Ks2 and the relay Ks3 are disconnected, in which case series DC/DC equivalent to the analog circuit is reflected by the series controlled current source 405, the current of each battery cluster can be accurately controlled by the current distribution algorithm, thus meeting requirement of inter-cluster balance; meanwhile, the controlled voltage source 406 needs to be connected in parallel between a positive and a negative of the direct-current bus, a value thereof is a minimum value of all combined cabinet cluster terminal voltages plus 20 V. As an inter-cluster terminal voltage difference does not exceed 10 V when Δsoc<10%, when a bus voltage is a minimum cluster terminal voltage plus 20 V, the voltage regulation capability of the series DC/DC within 20 V can completely cover voltage regulation requirements of all the combined cabinet clusters, a series DC/DC voltage after the analog circuit is cabinet-combined is a voltage difference between the bus voltage and the terminal voltage, and is automatically regulated by the ideal current source.

In the embodiments of the present disclosure, a high-speed operation requirement of switching diodes of real series DC/DC is met by constructing the analog circuit, external characteristics of the real series DC/DC can be reflected on the analog circuit by constructing the ideal power supply, and characteristics that the ideal current source cannot be opened and the ideal voltage source cannot be short-circuited are also addressed through series and parallel connection between the ideal power supply and the relays. Moreover, the analog circuit can speed up simulation, so that feasibility of the current distribution method can be quickly verified, and the current distribution method verified by the analog circuit can improve the stability and reliability of the battery energy storage system in practical applications.

Finally, it should be indicated that the embodiments above are merely specific embodiments of the present disclosure, for illustrating the technical solutions of the present disclosure, rather than limiting the present disclosure. The scope of protection of the present disclosure should not be limited thereto. While the detailed description is made to the present disclosure with reference to the preceding embodiments, those ordinarily skilled in the art should understand that any technician familiar with the present technical field still could, within the technical scope disclosed in the present disclosure, modify or readily envisage changes to the technical solutions described in the preceding embodiments, or make equivalent substitutions to some of the technical features therein; these modifications, changes or substitutions do not make corresponding technical solutions essentially depart from the spirit and scope of the technical solutions of the embodiments of the present disclosure, and all should be covered within the scope of protection of the present disclosure. Therefore, the scope of protection of the present disclosure should be determined by the scope of protection of the claims.

**INDUSTRIAL APPLICABILITY**

The present disclosure provides a current distribution method and an analog circuit. The method includes: determining, according to a total quantity of battery clusters of a plurality of battery clusters connected in parallel in a battery energy storage system, a distribution proportion constraint interval set for each battery cluster; determining, according to a battery-cluster parameter, a current distribution target proportion set for each battery cluster, where the current distribution target proportion is within the distribution proportion constraint interval, and the battery-cluster parameter includes at least one of the following: a present remaining capacity of the battery cluster, a capacity set critical value and the distribution proportion constraint interval; and distributing current to various battery clusters according to the current distribution target proportion. The present disclosure can ensure the battery clusters with different capacities to quickly reach balance during operation, thus achieving the effect of improving stability and reliability of the battery energy storage system.

In addition, it can be appreciated that the current distribution method and the analog circuit of the present disclosure are reproducible, and can be applied in a plurality of industrial applications. For example, the current distribution method and the analog circuit of the present disclosure can be applied in the field of circuit technologies.

**Claims**

1. A current distribution method, **characterized in that** it comprises steps of:

   determining, according to a total quantity of battery clusters of a plurality of battery clusters connected in parallel in a battery energy storage system, a distribution proportion constraint interval set for each battery cluster;
   determining, according to a battery-cluster parameter, a current distribution target proportion set for each battery cluster, wherein the current distribution target proportion is within the distribution proportion constraint interval, and the battery-cluster parameter comprises at least one of the following: a present remaining capacity of a battery cluster, a capacity set critical value and the distribution proportion constraint interval; and
   distributing current to various battery clusters according to the current distribution target proportion.

2. The method according to claim 1, wherein the step of determining, according to a total quantity of battery clusters of a plurality of battery clusters connected in parallel in a battery energy storage system, a distribution proportion constraint interval set for each battery cluster, comprises a step of:
   determining, when a system parameter of the battery energy storage system does not meet a current equipartition condition, according to the total quantity of battery clusters of the plurality of battery clusters connected in parallel in the battery energy storage system, the distribution proportion constraint interval set for each battery cluster.

3. The method according to claim 2, further comprising steps of:

   determining, when the system parameter of the battery energy storage system meets the current equipartition condition, according to the total quantity of battery clusters, a current equipartition proportion set for each battery cluster;
   and
   distributing current to various battery clusters according to the current equipartition proportion.

4. The method according to claim 2 or 3, wherein the current equipartition condition comprises one of the following: the battery energy storage system is in a standing operating condition; a direct-current converter in the battery energy storage system is in a fault state; a minimum state of charge of the battery energy storage system in discharging is not greater than a first preset proportion, and a maximum state of charge of the battery energy storage system in charging is not less than a second preset proportion, wherein the first preset proportion is less than the second preset proportion; and a difference between states of charge is less than a preset difference threshold, wherein the difference between the states of charge represents a difference between a maximum state of charge and a minimum state of charge of all battery clusters currently having been connected to a direct-current bus.

5. The method according to claim 1, wherein the step of determining, according to a total quantity of battery clusters of a plurality of battery clusters connected in parallel in a battery energy storage system, a distribution proportion constraint interval set for each battery cluster, comprises:

   acquiring the total quantity of battery clusters of the plurality of battery clusters connected in parallel in the battery energy storage system and an overload constraint proportion of the battery energy storage system, wherein the overload constraint proportion represents a preset proportion by which a current of the battery clusters exceeds a rated current range during charging or discharging; and
   determining, according to the overload constraint proportion, a distribution proportion constraint upper limit and a distribution proportion constraint lower limit of the battery energy storage system, so as to determine the distribution proportion constraint interval set for each battery cluster.

6. The method according to claim 5, wherein the step of determining, according to the overload constraint proportion, a distribution proportion constraint upper limit and a distribution proportion constraint lower limit of the battery energy storage system, comprises steps of:

   determining, according to the overload constraint proportion, a distribution proportion constraint upper limit total value and a distribution proportion constraint lower limit total value of the battery energy storage system; and

determining, using ratios of the distribution proportion constraint upper limit total value and the distribution proportion constraint lower limit total value to the total quantity of battery clusters, the distribution proportion constraint upper limit and the distribution proportion constraint lower limit set for each battery cluster.

7. The method according to claim 1, wherein the battery-cluster parameter comprises the present remaining capacity of the battery cluster and the capacity set critical value, wherein the capacity set critical value characterizes that various battery clusters in the battery energy storage system are converged to a consistent state of charge most quickly; and

the step of determining, according to a battery-cluster parameter, a current distribution target proportion set for each battery cluster, comprises steps of:

determining, according to present remaining capacities of various battery clusters and the capacity set critical value, a first to-be-adjusted current distribution proportion set for each battery cluster; and

determining, according to whether the first to-be-adjusted current distribution proportion is within the distribution proportion constraint interval, the current distribution target proportion.

8. The method according to claim 7, wherein the step of determining, according to whether the first to-be-adjusted current distribution proportion is within the distribution proportion constraint interval, the current distribution target proportion, comprises steps of:

determining, if detecting that the first to-be-adjusted current distribution proportion set for each battery cluster is within the distribution proportion constraint interval, the first to-be-adjusted current distribution proportion of each battery cluster within the distribution proportion constraint interval as the current distribution target proportion of each corresponding battery cluster.

9. The method according to claim 7, wherein the step of determining, according to whether the first to-be-adjusted current distribution proportion is within the distribution proportion constraint interval, the current distribution target proportion further comprises steps of:

adjusting, if detecting that the first to-be-adjusted current distribution proportion set for the battery cluster is not within the distribution proportion constraint interval, the capacity set critical value, re-determining, according to the present remaining capacities of various battery clusters and an adjusted capacity set critical value, the first to-be-adjusted current distribution proportion set for each battery cluster, until the first to-be-adjusted current distribution proportion re-set for each battery cluster is within the distribution proportion constraint interval, and determining the first to-be-adjusted current distribution proportion of each battery cluster within the distribution proportion constraint interval as the current distribution target proportion of each corresponding battery cluster.

10. The method according to claim 7, wherein the step of determining, according to a battery-cluster parameter, a current distribution target proportion set for each battery cluster, further comprises steps of:

determining, if detecting that an adjusted capacity set critical value is not within the capacity adjustment limiting range and that the first to-be-adjusted current distribution proportion re-set for the battery cluster is not within the distribution proportion constraint interval, a second to-be-adjusted current distribution proportion set for each battery cluster according to present remaining capacities of various battery clusters; and

determining, according to whether the second to-be-adjusted current distribution proportion is within the distribution proportion constraint interval, the current distribution target proportion.

11. The method according to claim 10, wherein the step of determining, according to whether the second to-be-adjusted current distribution proportion is within the distribution proportion constraint interval, the current distribution target proportion, comprises steps of:

determining, if detecting that the second to-be-adjusted current distribution proportion set for each battery cluster is within the distribution proportion constraint interval, the second to-be-adjusted current distribution proportion of each battery cluster within the distribution proportion constraint interval as the current distribution target proportion of each corresponding battery cluster.

12. The method according to claim 10, wherein the battery-cluster parameter comprises the distribution proportion constraint interval, and the distribution proportion constraint interval comprises the distribution proportion constraint upper limit and the distribution proportion constraint lower limit; and

the step of determining, according to whether the second to-be-adjusted current distribution proportion is within the distribution proportion constraint interval, the current distribution target proportion, further comprises steps of:

determining, if detecting that the second to-be-adjusted current distribution proportion set for a battery cluster is not within the distribution proportion constraint interval, a first quantity of battery clusters corresponding to battery clusters, of which the second to-be-adjusted current distribution proportion is greater than the distribution proportion constraint upper limit, and a second quantity of battery clusters corresponding to battery clusters, of which the second to-be-adjusted current distribution proportion is less than the distribution proportion constraint lower limit; determining a distribution proportion adjustment value, by which the second to-be-adjusted current distribution proportion not within the distribution proportion constraint interval is adjusted to a nearest distribution proportion constraint upper limit or distribution proportion constraint lower limit, so as to obtain a distribution proportion adjustment total value corresponding to all battery clusters, of which the second to-be-adjusted current distribution proportion is not within the distribution proportion constraint interval; and determining, according to a magnitude relationship between the distribution proportion adjustment total value and a preset distribution proportion adjustment threshold, the current distribution target proportion.

13. The method according to claim 12, wherein the distribution proportion adjustment value, by which the second to-be-adjusted current distribution proportion less than the distribution proportion constraint lower limit is adjusted to the distribution proportion constraint lower limit, is a negative value; and the distribution proportion adjustment value, by which the second to-be-adjusted current distribution proportion greater than the distribution proportion constraint upper limit is adjusted to the distribution proportion constraint upper limit, is a positive value.

14. The method according to claim 13, wherein the step of determining, according to a magnitude relationship between the distribution proportion adjustment total value and a preset distribution proportion adjustment threshold, the current distribution target proportion, comprises steps of:
if the distribution proportion adjustment total value is greater than the preset distribution proportion adjustment threshold, determining, according to the distribution proportion constraint lower limit, the distribution proportion adjustment total value and the second quantity of battery clusters, the current distribution target proportion set for battery clusters of which the second to-be-adjusted current distribution proportion is not within the distribution proportion constraint interval, and determining, according to the present remaining capacities of the battery clusters, the current distribution target proportion set for battery clusters of which the second to-be-adjusted current distribution proportion is within the distribution proportion constraint interval.

15. The method according to claim 14, wherein the step of determining, according to the distribution proportion constraint lower limit, the distribution proportion adjustment total value and the second quantity of battery clusters, the current distribution target proportion set for battery clusters of which the second to-be-adjusted current distribution proportion is not within the distribution proportion constraint interval, comprises steps of:

determining, using a ratio of the distribution proportion adjustment total value to the second quantity of battery clusters, a distribution proportion adjustment mean value; and determining, using a sum of the distribution proportion constraint lower limit and the distribution proportion adjustment mean value, the current distribution target proportion set for battery clusters of which the second to-be-adjusted current distribution proportion is not within the distribution proportion constraint interval.

16. The method according to claim 13, wherein the step of determining, according to a magnitude relationship between the distribution proportion adjustment total value and a preset distribution proportion adjustment threshold, the current distribution target proportion, further comprises a step of:
if the distribution proportion adjustment total value is less than or equal to the preset distribution proportion adjustment threshold, determining, according to the distribution proportion constraint upper limit, the distribution proportion adjustment total value and the first quantity of battery clusters, the current distribution target proportion set for battery clusters of which the second to-be-adjusted current distribution proportion is not within the distribution proportion constraint interval, and determining, according to present remaining capacities of battery clusters, the current distribution target proportion set for battery clusters of which the second to-be-adjusted current distribution proportion is within the distribution proportion constraint interval.

17. The method according to claim 13, wherein the step of determining, according to a magnitude relationship between the distribution proportion adjustment total value and a preset distribution proportion adjustment threshold, the current distribution target proportion, further comprises steps of:

re-calculating, if detecting that the current distribution target proportion, set for a battery cluster of which the second to-be-adjusted current distribution proportion is not within the distribution proportion constraint interval, is not within the distribution proportion constraint interval, the distribution proportion adjustment total value corresponding to all battery clusters of which the current distribution target proportion is not within the distribution proportion constraint interval; and

detecting a magnitude relationship between a re-calculated distribution proportion adjustment total value and the preset distribution proportion adjustment threshold, and cyclically executing following processes, until a new current distribution target proportion, re-set for each battery cluster of which the current distribution target proportion is not within the distribution proportion constraint interval, is within the distribution proportion constraint interval:

> re-determining, if the re-calculated distribution proportion adjustment total value is greater than the preset distribution proportion adjustment threshold, according to the distribution proportion constraint lower limit, the re-calculated distribution proportion adjustment total value and the second quantity of battery clusters, a new current distribution target proportion set for battery clusters of which the current distribution target proportion is not within the distribution proportion constraint interval; and
> re-determining, if the re-calculated distribution proportion adjustment total value is less than or equal to the preset distribution proportion adjustment threshold, according to the distribution proportion constraint upper limit, the re-calculated distribution proportion adjustment total value and the first quantity of battery clusters, a new current distribution target proportion set for battery clusters of which the current distribution target proportion is not within the distribution proportion constraint interval.

18. An analog circuit, **characterized in that** it is configured to apply the current distribution method according to any one of claims 1 to 17, wherein the analog circuit comprises: a main relay, a first relay, a second relay, a third relay, a controlled current source and a controlled voltage source, wherein
the controlled current source and the first relay are connected in series to form a first controlled branch, the controlled voltage source and the second relay are connected in series to form a second controlled branch, the first controlled branch and the second controlled branch are connected in parallel and then connected in series with the main relay, and the third relay and the controlled current source are connected in parallel.

S101

Determining, according to a total quantity of battery clusters of a plurality of battery clusters connected in parallel in a battery energy storage system, a distribution proportion constraint interval set for each battery cluster

S102

Determining, according to a battery-cluster parameter, a current distribution target proportion set for each battery cluster, where the current distribution target proportion is within the distribution proportion constraint interval, and the battery-cluster parameter includes at least one of the following: an available capacity of battery cluster, a target capacity lower limit and the distribution proportion constraint interval

S103

Distributing current to various battery clusters according to the current distribution target proportion

FIG. 1

S201

Determining, when a system parameter of a battery energy storage system does not meet a target preset condition, according to a total quantity of battery clusters of a plurality of battery clusters connected in parallel in the battery energy storage system, a distribution proportion constraint interval set for each battery cluster

S202

Determining, according to a battery-cluster parameter, a current distribution target proportion set for each battery cluster, where the current distribution target proportion is within the distribution proportion constraint interval, and the battery-cluster parameter includes at least one of the following: a present remaining capacity of the battery cluster, a capacity set critical value and the distribution proportion constraint interval

S203

Determining, when the system parameter of the battery energy storage system meets the target preset condition, according to the total quantity of battery clusters, a current equipartition proportion set for each battery cluster; and distributing current to various battery clusters according to the current equipartition proportion

**FIG. 2**

FIG. 3

FIG. 4

## INTERNATIONAL SEARCH REPORT

| International application No. |
| --- |
| **PCT/CN2023/131879** |

| A. | CLASSIFICATION OF SUBJECT MATTER |
| --- | --- |

H02J7/00(2006.01)i

According to International Patent Classification (IPC) or to both national classification and IPC

| B. | FIELDS SEARCHED |
| --- | --- |

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

CNTXT, WPABS, ENTXTC, CNKI: 派能, 曾繁伟, 陈泳吉, 牟建, 蔡雪峰, 并联, 电池, 个数, 数量, 数目, 分配, 分派, 调, 控, 电流, 比例, 比率, 流比, 百分比, %, 率, 幅度, 小于, 安全, 超过, 限制, 门坎, 门槛, 临界, 电池组, 电池族, 电池簇, 充电, 上限, 区间, 范围, 充电状态, 剩余电量, 剩余容量, 荷电状态, 快, 速, 平衡, 均衡, 一致, 相同, 同样, 过载, 过流, 过充电, 预定, 预设, battery, group, pack, parallel, number, over, charg+, current, ratio, percent+, SOC, state 1w of 1w charge

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2023170722 A1 (SAMSUNG ELECTRONICS CO., LTD.) 01 June 2023 (2023-06-01) description, paragraphs [0027]-[0161], and figures 1-9B | 1-18 |
| A | CN 105324907 A (VOLVO TRUCKS CORP.) 10 February 2016 (2016-02-10) entire document | 1-18 |
| A | CN 114598003 A (SHANGHAI VOLANT AEROTECH CO., LTD.) 07 June 2022 (2022-06-07) entire document | 1-18 |
| A | CN 115833290 A (CONTEMPORARY AMPEREX TECHNOLOGY CO., LTD.) 21 March 2023 (2023-03-21) entire document | 1-18 |
| A | CN 116826915 A (YUNCHU NEW ENERGY TECHNOLOGY CO., LTD.) 29 September 2023 (2023-09-29) entire document | 1-18 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 December 2023** | **21 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/131879** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2020282861 A1 (HYUNDAI MOTOR COMPANY et al.) 10 September 2020 (2020-09-10)<br>        entire document | 1-18 |
| A | US 2023139157 A1 (HUAWEI DIGITAL POWER TECHNOLOGIES CO., LTD.) 04 May 2023 (2023-05-04)<br>        entire document | 1-18 |
| A | WO 2022217857 A1 (HUNAN ADVANCECHIP ELECTRONIC TECHNOLOGY CO., LTD.) 20 October 2022 (2022-10-20)<br>        entire document | 1-18 |
| A | WO 2023169091 A1 (CONTEMPORARY AMPEREX TECHNOLOGY CO., LTD.) 14 September 2023 (2023-09-14)<br>        entire document | 1-18 |

Form PCT/ISA/210 (second sheet) (July 2022)

# EP 4 579 989 A1

**INTERNATIONAL SEARCH REPORT**
Information on patent family members

International application No.

**PCT/CN2023/131879**

| Patent document cited in search report | | | Publication date (day/month/year) | Patent family member(s) | | | Publication date (day/month/year) |
|---|---|---|---|---|---|---|---|
| US | 2023170722 | A1 | 01 June 2023 | WO | 2023096421 | A1 | 01 June 2023 |
| | | | | KR | 20230078445 | A | 02 June 2023 |
| CN | 105324907 | A | 10 February 2016 | US | 2016181838 | A1 | 23 June 2016 |
| | | | | US | 10505375 | B2 | 10 December 2019 |
| | | | | JP | 2016523503 | A | 08 August 2016 |
| | | | | JP | 6302056 | B2 | 28 March 2018 |
| | | | | EP | 3011655 | A1 | 27 April 2016 |
| | | | | EP | 3011655 | B1 | 10 May 2017 |
| | | | | WO | 2014202102 | A1 | 24 December 2014 |
| | | | | BR | 112015031946 | A2 | 25 July 2017 |
| | | | | CN | 105324907 | B | 21 December 2018 |
| | | | | BR | 112015031946 | B1 | 03 November 2021 |
| CN | 114598003 | A | 07 June 2022 | | None | | |
| CN | 115833290 | A | 21 March 2023 | US | 2023133875 | A1 | 04 May 2023 |
| | | | | KR | 20230062471 | A | 09 May 2023 |
| | | | | WO | 2023071197 | A1 | 04 May 2023 |
| | | | | EP | 4199302 | A1 | 21 June 2023 |
| CN | 116826915 | A | 29 September 2023 | | None | | |
| US | 2020282861 | A1 | 10 September 2020 | KR | 20200106601 | A | 15 September 2020 |
| | | | | KR | 102594315 | B1 | 27 October 2023 |
| | | | | US | 11427106 | B2 | 30 August 2022 |
| US | 2023139157 | A1 | 04 May 2023 | AU | 2020455649 | A1 | 09 February 2023 |
| | | | | BR | 112023000053 | A2 | 14 March 2023 |
| | | | | WO | 2022000473 | A1 | 06 January 2022 |
| | | | | EP | 4170843 | A1 | 26 April 2023 |
| | | | | CN | 114503387 | A | 13 May 2022 |
| WO | 2022217857 | A1 | 20 October 2022 | CN | 113036883 | A | 25 June 2021 |
| WO | 2023169091 | A1 | 14 September 2023 | | None | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311444824